# EUROPEAN PATENT SPECIFICATION

(11) **EP 1 719 739 B1**
(45) Date of publication and mention of the grant of the patent: **19.06.2013**
(21) Application number: 05710567.8
(22) Date of filing: 23.02.2005
(51) Int. Cl.: C03B 37/018, C03B 8/04

(54) **METHOD AND DEVICE FOR PRODUCING AN OPTICAL FIBER PREFORM**
VERFAHREN UND VORRICHTUNG ZUR HERSTELLUNG EINER VORFORM FÜR EINE OPTISCHE FASER
PROCEDE ET DISPOSITIF POUR LA FABRICATION D'UNE PRÉFORME DE FIBRES OPTIQUES

(30) Priority: 27.02.2004 JP 2004053842
(43) Date of publication of application: 08.11.2006
(73) Proprietor: Sumitomo Electric Industries, Ltd., Osaka-shi, Osaka 541-0041 (JP)
(72) Inventor: HIRANO, Masaaki,, Yokohama-shi, Kanagawa, (JP); NAKANISHI, Tetsuya,, Yokohama-shi, Kanagawa, (JP); SASAKI, Takashi,, Yokohama-shi, Kanagawa, (JP); YAMASHITA,Taiichiro,, Yokohama-shi, Kanagawa, (JP)
(74) Representative: HOFFMANN EITLE
(86) International application number: PCT/JP2005/002874
(87) International publication number: WO 2005/082798

(56) References cited:
- EP-A2- 1 201 614
- GB-A- 2 176 776
- JP-A- 56 045 845
- JP-A- 59 217 633
- JP-A- 60 122 738
- JP-A- 60 137 840
- JP-A- 61 295 248
- JP-A- 61 295 248
- JP-A- 2002 274 861
- JP-A- 2004 099 342
- JP-A- 2004 224 588

## Description

### Technical Field

The present invention relates to a method and apparatus for producing an optical fiber preform by Modified Chemical Vapor Deposition (MCVD) method.

### Background Art

MCVD method is a process in which glass layers are deposited on an inner surface of a silica glass pipe by heating the silica glass pipe with a heat source reciprocating along the longitudinal direction of the silica glass pipe while a gas containing at least a glass raw material is supplied into the silica glass pipe from an end thereof. An optical fiber preform can be obtained by collapsing the silica glass pipe in which the glass layers are thus deposited. In this case, the optical fiber preform may be a preform that can be drawn directly to form an optical fiber or a preform that can be drawn into an optical fiber after it is processed further by synthesizing glass material on the outer surface thereof or grinding the peripheral surface thereof.

When the source gas supplied to the silica glass pipe is heated with the heat source in a process for producing a preform according to the MCVD method, glass soot which is produced by reaction at the heating position adheres to the inner surface, downstream of the heating position, of the silica glass pipe to form a glass soot layer. Therefore, the amount of the glass soot deposited increases gradually from the heating start end on the source gas inlet side of the silica glass pipe, and the amount becomes constant from a certain position. The glass soot layer is consolidated by heating to produce a glass layer.

The shrinkage force in consolidating the glass soot layer increases as the amount of the glass soot deposited increases. The shrinkage force in consolidating the glass soot layer on the source gas inlet side of the silica glass pipe in which the glass soot is deposited in a small amount differs greatly from that on the exhaust side in which the glass soot is deposited in a large amount. A change in shrinkage force of the glass soot layer with positions on the silica glass pipe makes the shrinkage behavior of the silica glass pipe to be nonuniform and causes a disadvantage in which the outer diameter of the silica glass pipe is varied in the longitudinal direction and the thickness of the glass layer deposited in the silica glass pipe is nonuniform in the longitudinal direction.

For the process for producing a preform according to the MCVD method, therefore, there have been various proposals. For example, one of the proposed techniques is such that an internal pressure is applied to a silica glass pipe by controlling the amount of the buffering gas introduced into a buffer chamber, which is provided on the exhaust side of the silica glass pipe, for controlling the silica glass pipe to balance with the shrinkage force and not to cause shrinkage of the silica glass pipe (Patent Document 1). Another technique is such that the amount of the gas exhausted from a silica glass pipe is controlled, for controlling the internal pressure of the silica glass pipe (Patent Document 2), and yet another technique is such that an inert gas is supplied together with a source gas into a silica glass pipe from the source gas inlet side thereof so that the internal pressure of the silica glass pipe can be controlled by adjusting the amount of the inert gas supplied (Patent Document 3). The internal pressure of the silica glass pipe means a differential pressure, i.e., a gage pressure, between the absolute internal pressure of the pipe and the atmospheric pressure.

In a recent process for producing an optical fiber preform according to a MCVD method, it is required to deposit glass soot into a relatively thin-walled silica glass pipe with a wall thickness of 5 mm or less at a high deposition rate exceeding 0.5 g/min, thereby increasing the productivity of the preform. In this case, the silica glass pipe is thin-walled and thus easily deformed. Since the glass soot is thickly deposited, the difference in shrinkage force of the glass soot layer between both ends of the silica glass pipe becomes significant. As a result, the outer diameter precision of the preform significantly degrades. When the internal pressure of the pipe is controlled so as to cope with the shrinkage force, for keeping the dimension of the pipe uniform, the difference in internal pressure between both ends is significantly increased to 5 times or more. Therefore, in order to prevent a decrease in outer diameter precision, it becomes necessary to extend the control range of the internal pressure of the silica glass pipe and increase the control speed.

However, the techniques disclosed in Patent Documents 1, 2, and 3 cannot sufficiently cope with the extension of the control range and an increase in the control speed of the internal pressure of the silica glass pipe. For example, in the techniques of Patent Documents 1 and 2, if it is attempted to extend the control range and increase the control speed of the internal pressure of the silica glass pipe, the internal pressure of the silica glass pipe cannot be converged to the targeted proper value when a response of means for controlling the amount of the buffering gas introduced and the amount of exhaust gas to a change in the internal pressure of the silica glass pipe is made sensitive, because the internal pressure of the silica glass pipe after the control becomes an overreacted value to the targeted proper value and accordingly the internal pressure is immediately re-controlled to resolve a pressure difference corresponding to the overreacted value. Therefore, a misshaped silica glass pipe may occur due to a fluctuation of the internal pressure of the silica glass pipe. In addition, when the internal pressure of the pipe is rapidly decreased, a failure due to a backflow of soot occasionally occurs.

The technique of Patent Document 3 has a further problem such that the yield of the chemical reaction of the source gas and the deposition efficiency of the glass soot may be changed since the flow rate of the source gas supplied together with the inert gas is changed by controlling the flow rate of the inert gas.
Patent Document 1: Japanese Patent Application Publication No. 56-45845
Patent Document 2: Japanese Patent Application Publication No. 59-217633
Patent Document 1: Japanese Patent Application Publication No. 2002-274861

### Disclosure of Invention

### Problem to be Solved by the Invention

The present invention provides a method and apparatus for producing an optical fiber preform which are capable of preventing fluctuation in shrinkage of a silica glass pipe and continuously performing satisfactory production in a process for producing an optical fiber preform according to the MCVD method.

### Means for Solving the Problem

In order to achieve the object, in an aspect of the present invention, a method for producing an optical fiber preform is provided. This method includes a step of depositing a glass layer in a silica glass pipe, in which step the silica glass pipe is heated from outside by a heat source relatively moving in the longitudinal direction of the silica glass pipe while a gas containing at least a glass raw material is charged into the silica glass pipe from one of the ends therof. In the deposition step of the method, one or more exhaust portion and one or more buffering gas inlet portion are connected to the other end of the silica glass pipe, and at least the amount of the exhaust gas from the exhaust portion or the amount of the buffering gas introduced in the buffering gas inlet portion is feedback-controlled, and at least the other one of the amount of the exhaust gas from the exhaust portion and the amount of the buffering gas introduced in the buffering gas inlet portion is pattern-controlled according to a flow rate pattern corresponding to heating positions on the silica glass pipe.

In this case, the feedback control may be performed such that at least one of the amount of the exhaust gas from the exhaust portion and the amount of the buffering gas introduced in the buffering gas inlet portion may be controlled by measuring the internal pressure of the silica glass pipe so that the measured internal pressure may coincide with a targeted value which is set for each heating position. Alternatively, the feedback control may be performed such that at least one of the amount of the exhaust gas from the exhaust portion and the amount of the buffering gas introduced in the buffering gas inlet portion may be controlled by measuring the dimension of the silica glass pipe near each heating position so that the measured dimension of the silica glass pipe may become a predetermined dimension.

In the latter case, a preferable value, which can conform a measured dimension to a predetermined targeted value of internal pressure of the silica glass pipe, may be calculated beforehand, and the internal pressure of the silica glass pipe may be controlled to coincide with the calculated preferable value. Such dimension may be at least one of the outer diameter, the inner diameter, and the wall thickness of the silica glass pipe.

The deposition rate of the glass layer may be 0.5 g/min or more, and the ratio of the maximum to the minimum in a control range of the internal pressure of the silica glass pipe may be 2 times or more. Also, a fluctuation in the outer diameter of the silica glass pipe in the longitudinal direction after deposition of the glass layer may be ±1 mm or less. Furthermore, a rate of change in the internal pressure of the silica glass pipe may be -50 Pa to +50 Pa per second, and the duration time of the internal pressure of the silica glass pipe at +20 Pa or less may be less than 2 seconds.

In another aspect of the present invention, an apparatus for producing an optical fiber preform is provided. This apparatus comprises a gas supply system for introducing a gas containing at least a glass raw material into a silica glass pipe from one of the ends thereof, one or more exhaust portion and one or more buffering gas inlet portion (at least including the former), all of which can be connected to the other end of the silica glass pipe; a heat source which can move relatively in the longitudinal direction of the silica glass pipe; a position detecting means for detecting a heating position of the heat source on the silica glass pipe; a first control means for controlling, according to a flow rate pattern corresponding to the heating positions, at least the amount of the exhaust gas from the exhaust portion or the amount of the gas introduced into the buffering gas inlet portion; and a second control means for feedback-controlling at least the other one of the amount of the exhaust gas from the exhaust portion and the amount of the gas introduced into the buffering gas inlet portion.

The apparatus may further include a pressure measuring means for measuring the internal pressure of the silica glass pipe, and the second control means may feedback-control at least the amount of the exhaust gas from the exhaust portion or the amount of the gas introduced into the buffering gas inlet portion so that the internal pressure of the silica glass pipe may coincide with a targeted value set for each heating position. Alternatively, the apparatus may further include a dimension measuring means for measuring the dimension of the silica glass pipe near each heating position of the heat source, and the second control means may feedback-control at least the other one of the amount of the exhaust gas from the exhaust portion and the amount of the gas introduced into the buffering gas inlet portion so that the dimension of the silica glass pipe measured by the dimension measuring means may coincide with a predetermined targeted dimension of the pipe.

### Advantage of the Invention

The method and apparatus for producing an optical fiber preform of the present invention are capable of rapidly converging the internal pressure of the silica glass pipe to the targeted value without causing excessive response in a control operation even when the internal pressure of the silica glass pipe is controlled in a wide range. Therefore, even when a glass layer is deposited at a high deposition rate in a thin-walled silica glass pipe, fluctuation in shrinkage of the silica glass pipe can be prevented to continuously perform satisfactory production.

### Brief Description of the Drawings

Figure 1 is a conceptual view showing a first embodiment of an apparatus for producing an optical fiber preform according to the present invention.
Figure 2 is a block diagram showing the operation of a control unit of the apparatus for producing an optical fiber preform according to the first embodiment.
Figure 3 is a conceptual view showing a second embodiment of an apparatus for producing an optical fiber preform according to the present invention.
Figure 4 is a block diagram showing the operation of a control unit of the apparatus for producing an optical fiber preform according to the second embodiment.
Figure 5 is a conceptual view showing a third embodiment of an apparatus for producing an optical fiber preform according to the present invention.
Figure 6 is a block diagram showing the operation of a control unit of the apparatus for producing an optical fiber preform according to the third embodiment.
Figures 7(a) and 7(b) are graphs showing targeted values and measured values of the internal pressure of a pipe and a buffering gas flow rate, in which the values are plotted with regard to heating positions, and in which Fig. 7(a) is a graph of Comparative Example 1 and Fig. 7(b) is a graph of Comparative Example 2.
Figure 8 is a graph showing targeted values and measured values of the internal pressure of a pipe and a buffering gas flow rate, in which the values are plotted with regard to heating positions in Example 1.
Figure 9 is a graph showing targeted values and measured values of the internal pressure of a pipe and a buffering gas flow rate, in which the values are plotted with regard to heating positions in Example 2.
Figure 10 is a graph showing values of maximum/minimum ratio of the internal pressure of a pipe, in which the values are plotted with regard to the deposition rates shown in Table 1.
Figure 11 is a graph showing values of fluctuation in the outer diameter of a glass pipe, in which the values are plotted with regard to the deposition rate in each of the examples shown in Table 2.
Figure 12 is a graph showing values of fluctuation in the diameter of a glass rod, in which the values are plotted with regard to the deposition rate in each of the examples shown in Table 2.
Figure 13 is a graph showing values of the outer diameter of a silica glass pipe, in which the values are plotted with regard to the positions in the longitudinal direction of the silica glass pipe, using, as a parameter, the upper limit of a change of the internal pressure of the silica glass pipe in Example 4. Reference Numerals

| | |
|---|---|
| 1 | apparatus for producing an optical fiber preform |
| 3 | silica glass pipe |
| 5, 6 | glass pipe |
| 9 | support |
| 11 | buffer chamber |
| 13 | heat source |
| 14 | auxiliary heat source |
| 15 | pressure gauge |
| 17 | exhaust portion |
| 21 | first buffering gas inlet portion |
| 21b | flow rate control means |
| 22 | second buffering gas inlet portion |
| 22b | flow rate control means |
| 25 | position detecting means |
| 27 | control unit |
| 27a | first control means |
| 27b | second control means |
| 29 | soot |
| 31 | soot collecting unit |
| 33 | glass layer |
| 101 | apparatus for producing an optical fiber preform |
| 117 | flow rate control means |
| 201 | apparatus for producing an optical fiber preform |
| 227 | control unit |
| 227a | first control means |
| 227b | preferable pressure calculation unit |
| 227c | second control means |
| 230 | dimension measuring means |
| 231 | CCD camera |
| 232 | image analysis and processing device |

### Best Mode for Carrying Out the Invention

Embodiments of the present invention will be described below with reference to the drawings. The drawings are aimed at description, not at limiting the present invention. In the drawings, the same reference numeral denotes the same portion in order to avoid duplication of description. In the drawings, a dimensional ratio is not necessarily correct.

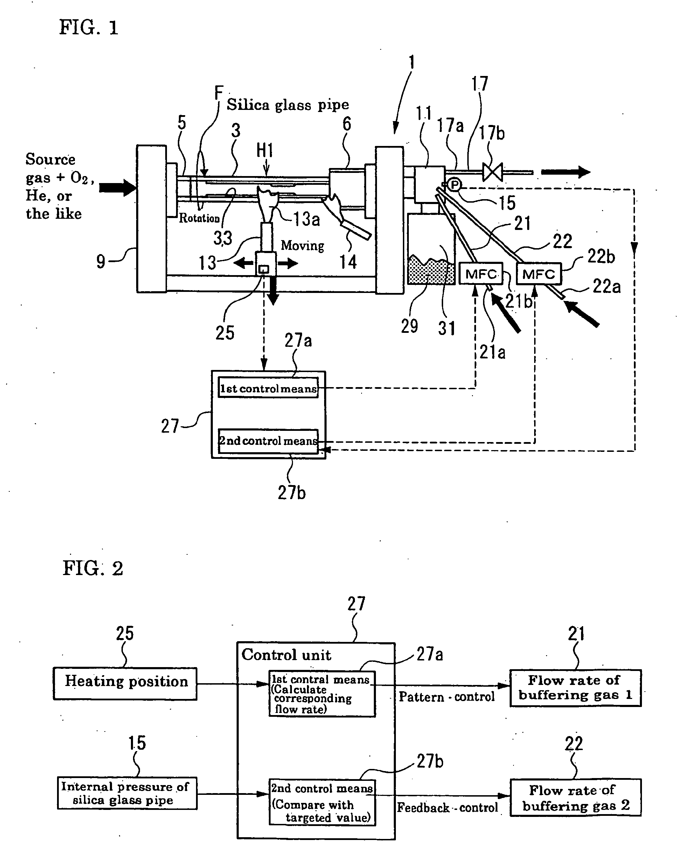

Figure 1 is a conceptual view showing an apparatus for producing an optical fiber preform according to a first embodiment of the present invention. In the apparatus 1 for producing an optical fiber preform according to the first embodiment, a glass layer is deposited on the inner peripheral surface of a silica glass pipe by an MCVD method to form an optical fiber preform. The apparatus 1 includes a support 9 for supporting both ends of the cylindrical silica glass pipe 3 through handling glass pipes 5 and 6, respectively. In Fig. 1, the silica glass pipe 3 is disposed horizontally in the longitudinal direction, but the silica glass pipe 3 may be disposed vertically. The support 9 has a rotation driving mechanism (not shown in the drawing) for rotating the silica glass pipe 3 around the central axis thereof.

The apparatus 1 for producing an optical fiber preform includes a source gas supply system (not shown) for introducing a glass source gas into the silica glass pipe 3 from an end (the left end in Fig. 1); a buffer chamber 11 connected to the other end of the silica glass pipe 3; a heat source 13, which is provided on the support 9 so as to be reciprocatable along the longitudinal direction of the silica glass pipe 3, for heating the silica glass pipe 3; a pressure gauge 15 for measuring the internal pressure of the silica glass pipe 3; first and second buffering gas inlet portions 21 and 22 and an exhaust portion 17, which are connected to the other end of the silica glass pipe 3 through the buffer chamber 11; position detecting means 25 for detecting a heating position of the heat source 13 on the silica glass pipe 3; and a control unit 27 for controlling the amounts of the gases introduced into the buffering gas inlet portions 21 and 22 to control the internal pressure of the silica glass pipe 3 to a desired value.

The gas supplied to one of the ends of the silica glass pipe 3 from the source gas supply system contains a halide such as SiCl₄, GeCl₄, POCl₃, SiF₄, or the like and siloxane such as (CH₃)₆-Si₂O or the like as glass raw material gases, and oxygen gas, helium gas, or the like as a carrier gas. The buffer chamber 11 is provided for adjusting the internal pressure of the silica glass pipe 3. A soot collecting unit 31 is connected to the bottom of the buffer chamber 11, for recovering soot 29 which is discharged to the buffer chamber 11 from the end of the silica glass pipe 3 without adhering to the inner peripheral surface of the silica glass pipe 3.

The heat source 13 is a burner for heating the silica glass pipe 3 to a predetermined temperature using a flame 13a such as an oxyhydrogen flame or plasma flame. A furnace such as an induction furnace or a resistance furnace, or a laser such as a CO₂ laser can be used as the heat source. In the first embodiment, an auxiliary heat source 14 is also provided for heating the glass pipe 6 so as to prevent adhesion of soot to the handling glass pipe 6 at the other end of the silica glass pipe 3. The silica glass pipe 3 supported on the support 9 is rotated in the direction of arrow F so that the pipe 3 is uniformly heated over the entire periphery with the heat source 13. In the first embodiment, the supply of the source gas and the heating operation with the heat source 13 are controlled so that the deposition rate of a glass layer is 0.5 g/min or more.

The pressure gauge 15 is a pressure measuring means for indirectly measuring the internal pressure of the silica glass pipe 3 by detecting the internal pressure of the buffer chamber 11 communicating with the silica glass pipe 3. The value of the internal pressure of the silica glass pipe 3, which is measured by the pressure gauge 15, is communicated to the control unit 27 for feedback control.

The exhaust portion 17 connected to the buffer chamber 11 includes an exhaust pipe 17a communicating with the buffer chamber 11 and an exhaust control valve 17b for controlling the amount of the exhaust gas from the buffer chamber 11 by adjusting the opening of the exhaust pipe 17a. The first and second buffering gas inlet portions 21 and 22 have flow rate control means 21b and 22b provided at intermediate positions of pipe lines 21a and 22a, respectively, which communicate with the buffer chamber 11. The amounts of the pressure control buffering gases supplied to the pipe lines 21a and 22a and introduced into the buffer chamber 11 can be controlled to desired flow rates by the flow rate control means 21b and 22b, respectively. The buffering gas supplied to each of the pipe lines 21a and 22a is, for example, an oxygen or inert gas.

In the first embodiment, the position detecting means 25, which is mounted on the heat source 13, measures a horizontal distance from one of the ends of the silica glass pipe 3 to the heat source 13 and thereby detects the heating position H1 on the silica glass pipe 3 heated by the heat source 13. The heating position H1 detected by the position detecting means 25 is communicated to the control unit 27.

Figure 2 is a block diagram showing the operation of the control unit of the apparatus for producing an optical fiber preform according to the first embodiment. The control unit 27 includes first and second control means 27a and 27b. The control unit 27 also has data collected on relations between the internal pressure of the silica glass pipe 3 and the change in the dimension of the pipe and relations between the internal pressure of the silica glass pipe 3 and the amount of the gas introduced therein. In addition, the control unit 27 has a calculation pattern that can calculate, based on the data, the amount of the gas to be introduced for securing the appropriate internal pressure of the silica glass pipe for each heating position H1.

The first control means 27a receives information on the heating positions H1 of the heat source 13 from the position detecting means 25. And, according to a flow rate pattern determined for heating positions H1 on the basis of the calculation pattern, the first control means 27a controls, through the flow rate control means 21b, the amount of the gas introduced into the buffer chamber 11 from the first buffering gas inlet portion 21. In a different system from the first control means 27a, the second control means 27b calculates a targeted value of the internal pressure of the silica glass pipe 3 for each heating position H1 on the basis of the calculation pattern and controls the amount of the gas supplied to the buffer chamber 11 through the flow rate control means 22b so that the measured value, which is communicated from the pressure gauge 15, of the internal pressure of the silica glass pipe 3 may coincide with the targeted value.

In the apparatus 1 for producing an optical fiber preform, the silica glass pipe 3 is externally heated by the heat source 13 while the glass raw material is charged in the silica glass pipe 3 from one of the ends to deposit a glass layer 33 on the inner surface of the silica glass pipe 3. During the time of such deposition, the amounts of the gases introduced from the buffering gas inlet portions 21 and 22 to the buffer chamber 11 are pattern-controlled by the first control means and feedback-controlled by the second control means so that the internal pressure of the silica glass pipe 3 is controlled by the control unit 27 to a predetermined value. The pattern control is very useful for changing, quickly and in a wide range, the internal pressure applied to the silica glass pipe 3. The feedback control is very useful for finely and precisely controlling the internal pressure of the silica glass pipe 3.

Thus, by combining the pattern control and the feedback control, which have different properties, the internal pressure of the silica glass pipe can be controlled and converged to the targeted proper value without causing excessive response in the control operation even when the internal pressure of the silica glass pipe 3 is controlled in a wide range. Therefore, even when the glass layer 33 is deposited at a high deposition rate in the thin-walled silica glass pipe 3, satisfactory production can be continuously performed while preventing fluctuation in the dimension of the silica glass pipe 3.

The silica glass pipe 3 in which the glass layer has been deposited to a predetermined thickness on the inner peripheral surface is further heated to be a solid rod by collapsing so as to become an optical fiber preform. In such solidification, the silica glass pipe may be shrunk directly to become a solid rod, or the silica glass pipe 3 may be collapsed to be integrated with a glass rod which has previously been inserted into the hollow of the pipe 3.

In the first embodiment, the internal pressure of the silica glass pipe 3 is detected directly by the pressure gauge 15 provided on the buffer chamber 11. However, the pressure gauge 15 may be provided at the exhaust portion 17, or at the end of the silica glass pipe 3 on the source gas inlet side, or the like. For example, when the pressure gauge 15 is provided on the exhaust portion 17, the internal pressure of the silica glass pipe 3 can be determined indirectly by relative comparison with the pressure of the exhaust portion.

In the first embodiment, the amount of the gas introduced into the buffer chamber 11 is controlled for controlling the internal pressure of the silica glass pipe 3. However, instead of control of the amount of the gas introduced, the amount of the exhaust gas from the exhaust portion 17 may be controlled, or both the amounts of the exhaust gas and the gas introduced may be controlled for controlling the internal pressure of the silica glass pipe.

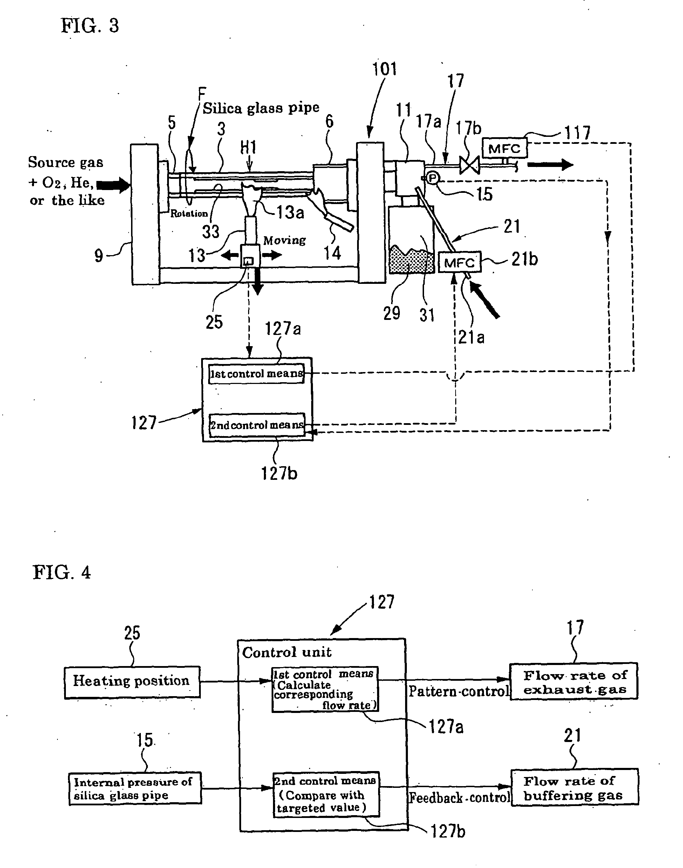

Figure 3 is a conceptual view of an apparatus for producing an optical fiber preform according to a second embodiment of the present invention. Figure 4 is a block diagram showing the operation of a control unit of the apparatus for producing an optical fiber preform according to the second embodiment. An apparatus 101 for producing an optical fiber preform of the second embodiment is different from the first embodiment in that the amount of the exhaust gas from a buffer chamber is pattern-controlled.

The apparatus 101 for producing an optical fiber preform has a control unit 127. Accordingly, the apparatus 101 for producing an optical fiber preform is partially different from the configuration of the apparatus 1 for producing an optical fiber preform in that the second buffering gas inlet portion 22 is omitted, and flow rate control means 117 is provided on the exhaust pipe 17a of the exhaust portion 17. However, the other components are the same as the apparatus 1 for producing an optical fiber preform. The control unit 127 has data on a relation between the internal pressure of the silica glass pipe 3 and a change of the dimension of the pipe for each heating position H1 and a relation between the amount of the exhaust gas and the internal pressure of the silica glass pipe 3, and it also has a calculation pattern which can calculate, on the basis of the data, the amount of the exhaust gas for securing the appropriate internal pressure of the silica glass pipe for each heating position H1.

The first control means 127a receives information of the heating position H1 from the position detecting means 25 and controls the amount of the exhaust gas from the exhaust portion 17 through the flow rate control means 117 according to a flow rate pattern which is determined for heating positions H1 on the basis of the calculation pattern. The second control means 127b calculates a targeted value of the internal pressure of the silica glass pipe 3 for each heating position H1 on the basis of the calculation pattern and controls the amount of the gas introduced in the buffer chamber 11 through the flow rate control means 21b so that the measured value of the internal pressure of the silica glass pipe 3, which is communicated from the pressure gauge 15, coincides with the targeted value.

Besides the flow rate control means 117, the exhaust portion 17 connected to the buffer chamber 11 further includes an exhaust pipe 17a communicating with the buffer chamber 11 and an exhaust control valve 17b for controlling the amount of the exhaust gas from the buffer chamber by adjusting the opening of the exhaust pipe 17a, as in the first embodiment. The amount of the exhaust gas may be controlled by a method of adjusting the opening of the exhaust control valve 17b. Even when the amount of the exhaust gas from the exhaust portion 17 is adjusted according to movement of the heating position H1 as in the apparatus 101 for producing an optical fiber preform, the internal pressure of the silica glass pipe 3 can be quickly controlled in a wide range, thereby exhibiting the same function and effect as in the first embodiment.

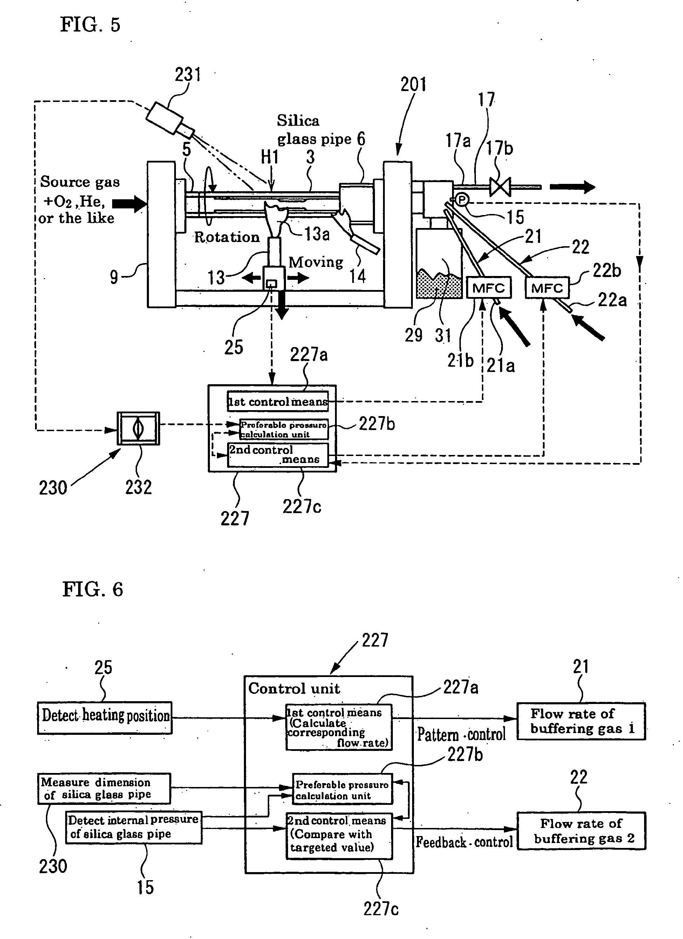

Figure 5 is a conceptual view of an apparatus for producing an optical fiber preform according to a third embodiment of the present invention. An apparatus 201 for producing an optical fiber preform according to the third embodiment is a partial modification of the apparatus 1 for producing an optical fiber preform of the first embodiment. The apparatus 201 includes a CCD camera 231 for taking the dimension of the silica glass pipe 3 near a heating position and a dimension measuring means 230 comprising an image analysis and processing device 232 for analyzing an image taken with the CCD camera 231 and calculating the dimension (outer diameter, inner diameter, or wall thickness) of the silica glass pipe 3.

A control unit 227 provided in the third embodiment includes a first control means 227a for controlling the amount of the gas introduced into a first buffering gas inlet portion 21 according to a flow rate pattern, which is previously determined for heating positions H1 of a heat source 13 on the silica glass pipe 3, a preferable pressure calculation unit 227b for determining a preferable value of the internal pressure of the silica glass pipe 3 necessary for conforming the measured dimension of the silica glass pipe 3 near each heating position H1 on the silica glass pipe 3 to the predetermined targeted pipe dimension, and a second control means 227c for feedback-controlling the amount of the gas introduced in a second buffering gas inlet portion 22 so that the measured value of the pressure gauge 15 detected by the pressure gauge 15 coincides with the preferable value calculated by the preferable pressure calculation unit 227b. In the third embodiment, the preferable pressure calculation unit 227b obtains information of the dimension of the silica glass pipe 3 near each heating position from the results of analysis by the image analysis and processing device 232 of the dimension measuring means 230.

In the apparatus 201 for producing an optical fiber preform, a glass layer 33 is deposited in the silica glass pipe 3 by externally heating the silica glass pipe 3 with the heat source 13 while the glass raw material is charged into the silica glass pipe 3 from one of the ends thereof. At the same time, the amounts of the gases introduced in the buffer chamber 11 from the buffering gas inlet portions 21 and 22 are controlled by the control unit 227 to adjust the internal pressure of the silica glass pipe 3 to a desired value, thereby realizing production of an optical fiber preform with the MCVD method.

Figure 6 is a block diagram showing the operation of the control unit of the apparatus for producing an optical fiber preform according to the third embodiment. In the control unit 227, the first and second control means 227a and 227b separately control the amounts of the introduced gases. The first control means 227a receives information of each heating position H1 of the heat source 13 from the position detecting means 25 and performs pattern control in which the amount of the gas introduced in the first buffering gas inlet portion 21 is controlled according to a flow rate pattern, which is previously determined, on the basis of the information to change the internal pressure of the silica glass pipe 3 to a predetermined pressure.

In parallel with the processing of the first control means 227a, the preferable pressure calculation unit 227b measures, through the dimension measuring means 230, the outer diameter dimension as the dimension of the silica glass pipe 3 near each heating position H1 on the silica glass pipe 3 and thus performs a preferable pressure calculation step of determining the preferable value of the internal pressure of the silica glass pipe 3 so that the measured pipe dimension may conform to the predetermined targeted pipe dimension.

The second control means 227c feedback-controls the amount of the gas introduced into the second buffering gas inlet portion on the basis of the measured value of the internal pressure of the silica glass pipe 3 so that the measured value of the internal pressure of the silica glass pipe 3 detected by the pressure gauge 15 coincides with the preferable value calculated by the preferable pressure calculation unit 227b. The amounts of the gases introduced in the buffering gas inlet portions 21 and 22 may be controlled without calculation of the preferable internal pressure of the silica glass pipe 3 so that the measured dimension of the silica glass pipe 3 coincides with the targeted dimension which is previously determined for each heating position H1 of the heat source 13.

As in the case of producing an optical fiber preform using the apparatus 1, in the method for producing an optical fiber preform using the apparatus 201, the internal pressure of the silica glass pipe 3 is controlled by performing pattern control and feedback control in the process for producing an optical fiber preform according to the MCVD method so that the deviation in the outer diameter of the silica glass pipe 3 may be prevented when it is externally heated by the reciprocating heat source 13.

In such case, the pattern control, which is performed, as in the first embodiment, for adjusting the internal pressure of the silica glass pipe 3 by introducing a gas in an amount corresponding to the heating position H1 of the heat source 13, is very useful for quickly and widely changing the internal pressure applied to the silica glass pipe 3. On the other hand, the feedback control in the apparatus 201 for producing an optical fiber preform, which control is performed for feedback-controlling the amount of the gas introduced on the basis of the measured value detected by the pressure gauge 15 and the preferable internal pressure of the silica glass pipe 3 which is calculated by the preferable pressure calculation unit 227b, is very useful for precisely and finely adjusting the dimension of the silica glass pipe 3 to the predetermined targeted dimension.

As in the first embodiment, the combination of the pattern control and the feedback control having different properties can rapidly control and converge the internal pressure of the silica glass pipe to the targeted proper value without causing excessive response in the control operation even when the internal pressure of the silica glass pipe 3 is controlled in a wide range. Therefore, even when the glass layer 33 is deposited at a high deposition rate in the thin-walled silica glass pipe 3, satisfactory production can be continuously performed while preventing fluctuation in the dimension of the silica glass pipe 3.

The dimension of the silica glass pipe 3 which is influenced by the internal pressure of the silica glass pipe 3 is the outer diameter, inner diameter, or wall thickness of the silica glass pipe 3, and at least one of these dimensions may be monitored in the preferable pressure calculation step: a dimension parameter easy to measure can be determined by selecting a measurement device and measurement method necessary for measuring such dimension. Any one of the outer diameter, inner diameter, and wall thickness of the silica glass pipe 3 may be used as the dimension parameter provided that precise measurement is possible. This can contribute to improvement in control precision of the feedback control, thereby realizing the production of a preform stably maintaining the dimension of the silica glass pipe 3.

The methods to be adopted for measuring the dimension of the silica glass pipe 3 may be a method in which an image taken with the CCD camera is processed to measure the outer diameter, inner diameter, or wall thickness of the silica glass pipe 3, or a method in which the outer diameter of the silica glass pipe 3 near each heating position is measured using a laser outer diameter measuring device, or a method in which the outer diameter, inner diameter, or wall thickness is measured using transmitted X-rays, or a method in which the silica glass pipe 3 is irradiated with an acoustic wave or light and the propagation time of the acoustic wave or the optical path length of the light is analyzed to measure the wall thickness of the silica glass pipe 3.

In the process for producing an optical fiber preform according to the MCVD method, as the deposition rate of the glass layer 33 in the silica glass pipe 3 increases to, for example, 0.5 g/min or more, the amount of the glass layer deposited in the silica glass pipe 3 tends to change more in the longitudinal direction, and accordingly the control range of the internal pressure of the silica glass pipe 3 increases. In this case, as described above in each of the embodiments, it is very effective to combine the pattern control suitable for quickly adjusting the internal pressure of the pipe in a wide range and the feedback control suitable for finely and precisely controlling the internal pressure of the pipe in a narrow range. As a result, a stable production of preform products can be realized, and productivity of preform products can be improved by improvement of the deposition rate.

The outer diameter of the pipe may be increased again by the internal pressure of the pipe after the diameter has been reduced by shrinkage of soot. Therefore, in the feedback control under predetermined conditions, the feedback control may be not satisfactorily performed depending on whether the position of the pipe where the dimension thereof is measured is in a state under shrinkage, under expansion, or post-expansion. For example, when the outer diameter is measured during shrinkage or expansion, an excessive internal pressure may be applied by the control, thereby greatly expanding the pipe. Also, since a position that is in a post-expansion state is 10 to 50 mm rearward of a portion where glass is becoming transparent, the control may be delayed if the outer diameter is measured at the position of post-expansion state, and accordingly the internal pressure of the pipe may be greatly changed for compensating the delay, causing the outer diameter to greatly fluctuate periodically.

Such great fluctuation in the outer diameter of the pipe easily occurs when the deposition rate of the MCVD method is 0.5 g/min or more and the deposit of soot is increased. It is also known that great fluctuation in the outer diameter easily occurs in a case of wide heat zone, such as a heat zone having a length of 50 mm or more, in which the temperature of the outer surface of the pipe is 1600°C or more.

In order to avoid such great fluctuation in the outer diameter, preferably, the outer diameter is measured at a plurality of points along the longitudinal direction of the pipe, and predictive control is performed estimating the post-expansion outer diameter of the pipe on the basis of the measurements. As a result, great fluctuation in the outer diameter can be suppressed. The measurement positions of the pipe preferably include a position in which the reduction of the diameter is not yet started, a position which is under reduction of the diameter, a position which is under expansion, and a position in which the expansion is completed.

The term "predictive control" means, for example, a method in which control is performed by predicting the rates of diameter reduction and expansion of the pipe and the post-expansion outer diameter on the basis of measurement positions and the outer diameters at the respective measurement positions, and by calculating the degree in which the present internal pressure applied to the pipe is to be increased or decreased. Alternatively, "predictive control" means a method in which the temperature is measured at each measurement position of the outer diameter or estimated by a heat transfer formula from a temperature measured at another position, and the viscosity of the pipe is determined on the basis of the temperature so that a degree of diameter reduction or expansion of the pipe due to surface tension is estimated to predict the post-expansion outer diameter.

When the pressure is rapidly increased or decreased, the outer diameter is greatly changed if the control is delayed. Therefore, when the greatly changed outer diameter is used in control, further deformation in the opposite direction (rapid diameter reduction in the case where expansion has occurred, or rapid expansion in the case where diameter reduction has occurred) occurs. As described above, periodic great fluctuation easily occurs in the outer diameter, but this fluctuation can be avoided by limiting a rate of change in the internal pressure of the pipe in a range of ±50 Pa/sec or less.

### Example 1

The actual internal pressures of silica glass pipes were compared with respect to Example 1, Comparative Example 1, and Comparative Example 2. In Example 1, using the apparatus 1 for producing an optical fiber preform, the amount of the buffering gas introduced was pattern-controlled by the first control means according to heating positions, and the amount of the buffering gas introduced was feedback-controlled by the second control means so that the internal pressure of the pipe might be a targeted value, while in Comparative Example 1 only feedback control was performed, whereas in Comparative Example 2 only pattern control was performed.

In any one of the examples, the silica glass pipe used had an outer diameter of 34 mm, a wall thickness of 4 mm, and a length of 800 mm, and contained 0.2% by weight of Cl. As a heat source, a thermal plasma burner was used. The rate of reciprocation of the burner, i.e., the moving velocity of the heating position on the silica glass pipe, was 100 mm/min. The maximum temperature of the outer surface of the silica glass pipe was controlled at 2200°C, and the synthesis rate of a glass layer was controlled to 1 g/min. A targeted value of the refractive index difference of the glass layer relative to pure silica glass was 0.40%. Also, a buffer chamber was provided at an end, and the internal pressure of the buffer chamber was regarded as the internal pressure of the pipe. The amount of exhaust gas was determined so that the internal pressure of the pipe was about -20 Pa without a flow of a buffering gas. Under these conditions, five glass layers were deposited by the MCVD method.

It was found by the inventors that in the MCVD method performed under the above-mentioned conditions, the internal pressure of the silica glass pipe must be about +50 Pa when the heating position is near the source gas inlet end where a glass soot layer is deposited in a small amount, while the internal pressure of the silica glass pipe must be about +400 Pa when the heating position is near the exhaust end where a glass soot layer is deposited in a large amount.

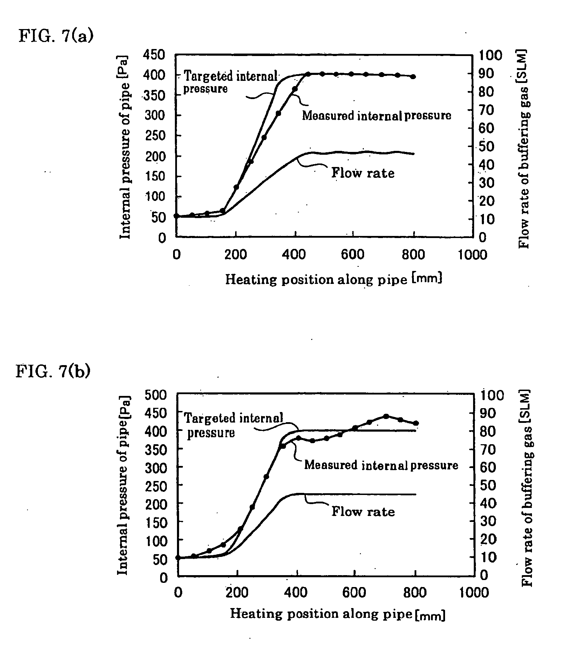

Figures 7(a) and 7(b) are graphs plotting the targeted values (targeted pressure) and measured values of the internal pressure of the pipe and the flow rates of the buffering gas with regard to the heating positions. Figure 7(a) is a graph of Comparative Example 1, and Fig. 7(b) is a graph of Comparative Example 2. In Comparative Example 1, as shown in Fig. 7(a), a difference of about ±40 Pa occurred between the targeted value and the measured value of the internal pressure of the silica glass pipe, and consequently an error of about ±2 mm of the outer diameter of the silica glass pipe occurred relative to a reference value. Also, the amount of the buffering gas introduced changed from 10 to 46 SLM (flow rate by liter/min under standard conditions) according to differences between the targeted value and the measured value of the internal pressure of the silica glass pipe. In Comparative Example 1, a solid glass rod of 500 mm length produced from the silica glass pipe had a glass layer synthesis portion with a diameter of 5.5±0.2 mm and a refractive index difference of 0.395±0.10% relative to pure silica glass. Therefore, the solid glass rod had unsatisfactory quality.

In Comparative Example 2, the exhaust conditions were changed with changes in the amount of the buffering gas introduced, thereby causing a failure in which the exhaust portion was clogged with the soot produced during the deposition of the glass soot layer. In Comparative Example 2, as shown in Fig. 7(b), a difference of about ±40 Pa occurred between the targeted value and the measured value of the internal pressure of the silica glass pipe, and consequently an error of about ±2 mm of the outer diameter of the silica glass pipe occurred relative to a reference value. Also, in Comparative Example 2, the amount of the buffering gas introduced changed from 10 to 45 SLM with movement of the heating position. In Comparative Example 2, a solid glass rod of 500 mm length produced from the silica glass pipe had a glass layer synthesis portion with a diameter of 5.7±0.2 mm and a refractive index difference of 0.410±0.10% relative to pure silica glass. Therefore, the solid glass rod had unsatisfactory quality.

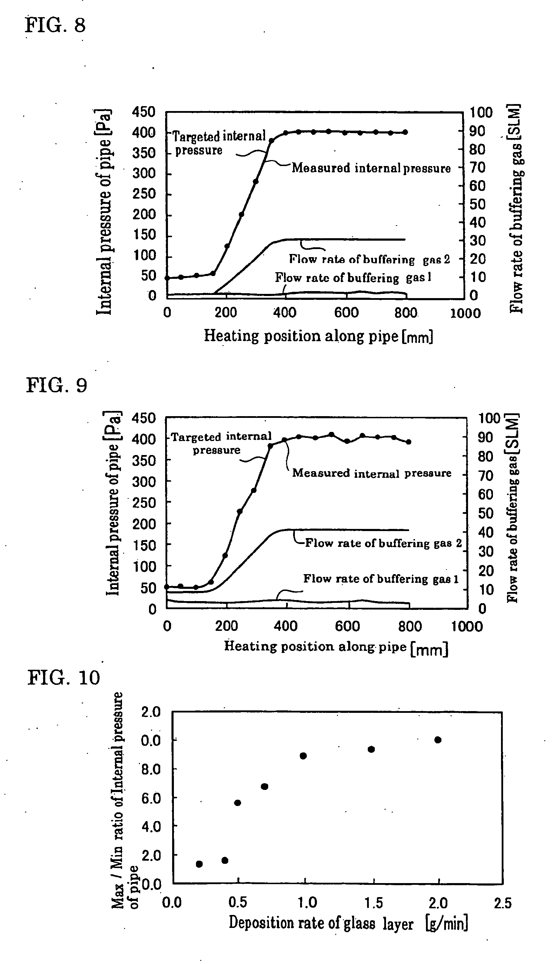

Figure 8 is a graph plotting the targeted values and the measured values of the internal pressure of the pipe and the flow rates of the buffering gas with regard to the heating positions in Example 1. In Example 1, the amount of the gas 1 introduced from the first buffering gas inlet portion was changed from 2 to 18 SLM by pattern control. In addition, the amount of the gas 2 introduced from the second buffering gas inlet portion was changed from 10 to 20 SLM by feedback control according to differences between the measured value and the targeted value of the internal pressure of the silica glass pipe. As a result, a difference between the internal pressure of the silica glass pipe and the targeted value could be suppressed to a very small value of ±3 Pa, and satisfactory control could be achieved.

### Example 2

In Example 2, using the apparatus 201 for producing an optical fiber preform, the amount of the buffering gas 1 introduced was pattern-controlled by the first control means according to heating positions, and the amount of the buffering gas 2 introduced, was feedback-controlled by the second control means so that the internal pressure of the pipe might be a targeted value. Figure 9 is a graph plotting the targeted values and the measured values of the internal pressure of the pipe and the flow rates of the buffering gas with regard to the heating positions in Example 2. The silica glass pipe and heat source used were the same as in Example 1. A preform was produced under conditions in which a heat source velocity was 150 mm/min, the highest temperature of the outer surface of the silica glass pipe was 2200°C, the deposition rate of a glass layer was 1 g/min, and a targeted refractive index difference of the glass layer relative to pure silica glass was 0.40%. The amount of exhaust was controlled so that the internal pressure of the silica glass pipe might be about -30 Pa without a flow of a buffering gas. Under these conditions, ten glass layers were deposited by the MCVD method.

In the apparatus with the configuration shown in Fig. 5, feedback control was carried out with the preferable pressure calculation unit 227b and the second control means 227c so that the outer diameter of the silica glass pipe measured by the CCD camera 231 might be 34 mm in diameter over the entire region in the longitudinal direction of the silica glass pipe 3. Also, the amount of the gas introduced from the first buffering gas inlet portion was changed from 8 to 40 SLM with movement of the heating position. The amount of the gas introduced from the second buffering gas inlet portion was feedback-controlled to be changed from 10 to 17 SLM according to differences between the measured value and the targeted value of the internal pressure of the silica glass pipe. It was made possible to control the internal pressure of the silica glass pipe 3 by feedback control using the preferable pressure calculation unit 227b and the second control means 227c such that the internal pressure of the silica glass pipe was about +45 Pa when the heating position was near the source gas inlet end, while the internal pressure of the silica glass pipe 3 was about +415 Pa when the heating position was near the exhaust end.

In the production process of Example 2, a difference between the internal pressure of the silica glass pipe and the targeted value could be suppressed to a very small value of ±3 Pa, and satisfactory control could be achieved. Also, the outer diameter of the silica glass pipe was 34.0 ±0.2 mm in diameter, and the obtained results were more satisfactory than Example 1. Thus, a solid glass rod of 500 mm length produced from the silica glass pipe had a glass layer synthesis portion with a diameter of 5.6±0.1 mm and a refractive index difference of 0.400±0.06% relative to pure silica glass. Therefore, satisfactory quality with small fluctuation was obtained.

Table 1 shows pressures (maximum pressure) required for maintaining the dimension of the silica glass pipe constant at the downstream side (at one end) with respect to a raw material flow at the respective deposition rates of 0.2 to 2.0 g/min during deposition of glass layers in the silica glass pipe by the MCVD method. A pressure (minimum pressure) required for maintaining the dimension of the silica glass pipe constant at the upstream side (at the other end) with respect to the raw material flow is +45 Pa at any one of the deposition rates of 0.2 to 2.0 g/min. Figure 10 is a graph plotting the maximum/minimum ratios of the internal pressure of the pipe with regard to the deposition rates shown in Table 1.

**Table 1**

| Deposition Rate g/mm | Maximum value of internal pressure of pipe Pa | Ratio |
|---|---|---|
| 0.2 | +60 | 1.3 |
| 0.4 | +70 | 1.6 |
| 0.5 | +250 | 5.6 |
| 0.7 | +300 | 6.7 |
| 1.0 | +400 | 8.9 |
| 1.5 | +420 | 9.3 |
| 2.0 | +450 | 10.1 |

At any one of the deposition rates, the pressure required for maintaining the dimension of the silica glass pipe constant differs between one end side of the pipe and the other end side. In order to prevent fluctuation in the dimension of the silica glass pipe 3 in the longitudinal direction, it is necessary to control the internal pressure of the silica glass pipe 3 with movement of the heating position. The necessary control range (maximum/minimum ratio) tends to increase as the deposition rate of the glass layer 33 increases. The maximum/minimum ratio is preferably set to 2 times or more. When the ratio is set to 2 times or more, the dimension of the silica glass pipe 3 can be maintained constant even at a deposition of the glass layer 33 of 0.5 g/min or more, as shown in Table 1 and Fig. 10. By repeating deposition of the glass layer 33 at a high deposition rate of 0.5 g/min or more, a large preform can be stably produced.

In the method for producing an optical fiber preform according to the present invention, if an allowable difference between a measured outer diameter, as a dimension of the silica glass pipe 3, and a predetermined targeted outer diameter is previously determined and if an actually measured value is within the range of the allowable value, calculation of the preferable value regarding the internal pressure of the silica glass pipe 3 on the basis of the difference between the measured value and the predetermined targeted value of the outer diameter can be omitted to simplify processing. Also, in this case, if the allowable value is specified in terms of a value in a region which is processed into an optical fiber, quality can be maintained in a range which causes no actual damage to an optical fiber even when a dimensional error occurs in the outer diameter. As a result, products with stable quality can be produced in high yield according to design specifications. Specifically, it is preferable that with a fluctuation in the outer diameter of the silica glass pipe 3 after deposition of the glass layer 33 be set to ±1 mm or less in a region which is to be processed into an optical fiber in a subsequent processing step.

### Example 3

Glass layers were deposited in a silica glass pipes by the MCVD method using the apparatus 201 for producing an optical fiber preform in the following manners: in Example 3, pattern control and feedback control were carried out for controlling the outer diameter of a pipe to a predetermined value; in Comparative Example 3, only feedback control was carried out for controlling the internal pressure of a silica glass pipe to a predetermined value; and in Comparative Example 4, only feedback control was carried out for controlling the outer diameter of a pipe to a predetermined value.

In any one of the example and the comparative examples, the silica glass pipe used had an outer diameter of 42 mm, a wall thickness of 3 mm, and a length of 800 mm, and contained 0.2% by weight of Cl. As a heat source, a plasma burner using thermal plasma was used. The rate of reciprocation of the burner was 140 mm/min. The maximum temperature of the outer surface of the silica glass pipe was controlled to 2200°C, and the deposition rate of a glass layer was controlled to 0.2 to 3.0 g/min. In Example 3 and Comparative Examples 3 and 4, the predetermined value of the outer diameter of the pipe was 42 mm. Under these conditions, 20 glass layers were deposited by the MCVD method, and fluctuation in the outer diameter of the silica glass pipe after completion of the deposition of the glass layers and fluctuation in the diameter of a solid glass rod produced from the silica glass pipe were measured and compared (Table 2).

The outer diameter of the silica glass pipe was measured by taking an image of an intermediate portion of 600 mm, excluding a portion of 100 mm from either end of the pipe, with a CCD camera, and processing the image. The diameter of the glass rod was measured for an intermediate portion of 450 mm, excluding a portion of 200 mm from one of the ends of the glass deposit and a portion of 150 mm from the other end.

**Table 2**

| **Deposition rate g/min** | **Comparative example 3** | | **Comparative example 4** | | **Example 3** | |
|---|---|---|---|---|---|---|
| | **Fluctuation in outer diameter of pipe %** | **Fluctuation in diameter of rod %** | **Fluctuation in outer diameter of pipe %** | **Fluctuation in diameter of rod %** | **Fluctuation in outer diameter of pipe %** | **Fluctuation in diameter of rod %** |
| 0.2 | ±1. 8 | +1. 2. | ±0. 20 | ±0. 35 | ±0. 15 | ±0. 21 |
| 0.4 | ±1. 9 | ±1. 5 | ±0. 44 | ±0. 38 | ±0. 15 | ±0. 22 |
| 0.5 | ±2. 4 | ±2. 0 | ±1. 6 | ±1. 2 | ±0. 12 | ±0. 21 |
| 0.6 | ±3. 5 | ±3. 1 | ±1. 9 | ±1. 5 | ±0. 1.3 | ±0. 22 |
| 1.0 | ±5. 9 | ±5. 2 | ±3. 5 | ±2. 9 | ±0. 15 | ±0. 24 |
| 1.5 | ±6. 2 | ±5. 3. | ±4. 4 | ±3. 8 | ±0. 18 | ±0. 26 |
| 2.0 | ±6. 8 | ±5. 2 | ±4. 7 | ±4. 2 | ±0. 24 | ±0. 31 |
| 2.5 | ±7. 4 | ±5. 4 | ±5. 0 | ±4. 4 | ±0. 35 | ±0. 35 |
| 3.0 | ±8. 5 | ±5. 4 | ±5. 2 | ±4. 4 | ±0. 44 | ±0. 55 |

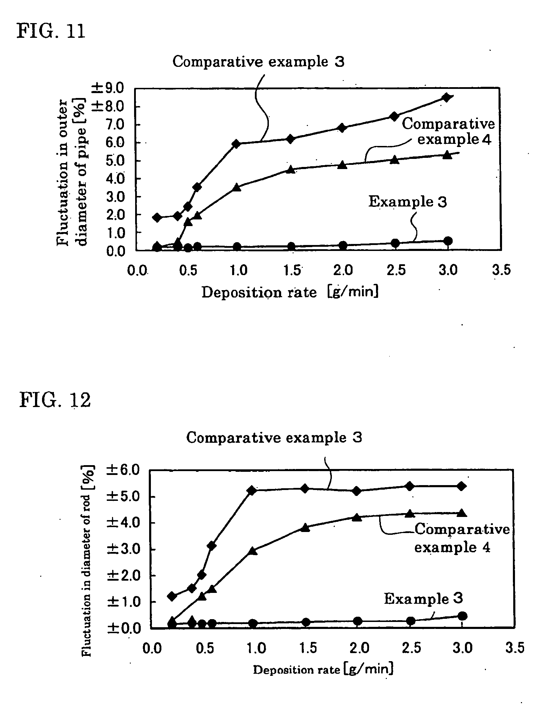

Figure 11 is a graph showing plots of fluctuation in the outer diameter of the glass pipe with regard to the deposition rates in the example and comparative examples shown in Table 2. Figure 12 is a graph showing plots of fluctuation in the diameter of the glass rod with regard to the deposition rates in the example and comparative examples shown in Table 2. The measurement results indicate that in Comparative Examples 3 and 4, the outer diameters of the pipes and the diameters of the deposited portions of the rods greatly fluctuate with the deposition rates. However, in Example 3, the outer diameter of the pipe and the diameter of the deposited portion of the rod slightly fluctuate, thereby achieving satisfactory quality.

### Example 4

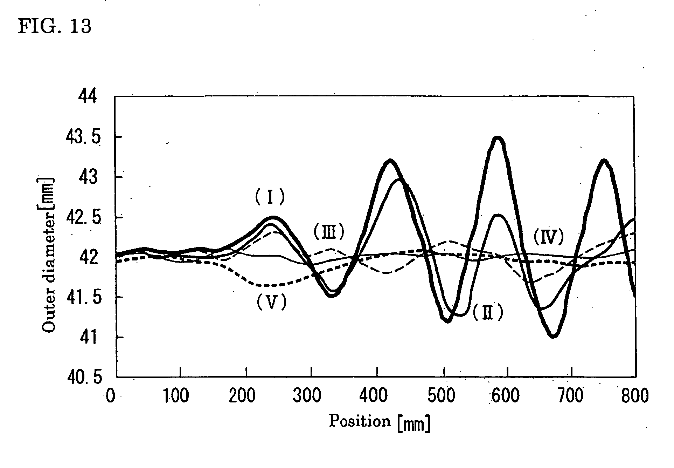

Fluctuation in an outer diameter was evaluated in the case where glass layers of GeO₂-P₂O₅-SiO₂ (refractive index difference of about 0.3% relative to pure SiO₂) were deposited at a deposition rate of 1.5 g/min while a silica glass pipe having an outer diameter of 42 mm and a wall thickness of 3 mm and containing 0.6% by weight of fluorine was heated with a thermal plasma burner used as a heat source so that the maximum temperature of the outer surface of the pipe was 1800°C. Figure 13 is a graph plotting the outer diameters of the silica glass pipe with regard to positions on the silica glass pipe in the longitudinal direction, using, as a parameter, the upper limit of a rate of change in the internal pressure of the silica glass pipe in Example 4. In Fig. 13, I) shows the case where the rate of change in the internal pressure of the silica glass pipe was not limited (the maximum variation was ±80 Pa/sec), II) shows the case where the rate of change in the internal pressure of the pipe was limited to ±60 Pa/sec, III) shows the case where the rate of change in the internal pressure of the pipe was limited to ±50 Pa/sec, IV) shows the case where the rate of change in the internal pressure of the pipe was limited to ±30 Pa/sec, and V) shows the case where the rate of change in the internal pressure of the pipe was limited to ±10 Pa/sec. In these cases, the respective average of the internal pressure of the pipe was about +200 Pa.

Under the conditions of cases (I) and (II) in which the rate of change in the internal pressure of the pipe is large, the fluctuation in the outer diameter of the pipe is larger than ±1 mm in diameter, and satisfactory quality cannot be obtained by the MCVD method. In case (III) in which the rate of change was limited to ±50 Pa/sec, the fluctuation can be suppressed to ±1 mm or less, but is larger than that in case (IV) in which the rate of change in the internal pressure of the pipe was limited to ±30 Pa/sec. In case (V) in which the rate of change in the internal pressure of the pipe was suppressed to ±10 Pa/sec or less, the rate of fluctuation in the internal pressure of the pipe was excessively low, and thus the diameter was reduced in a portion in which the thickness of the soot deposit increased. However, in case (V), the fluctuation in the outer diameter could be suppressed to ±1 mm or less in diameter.

Therefore, when the rate of change in the internal pressure of the pipe is limited to ±50 Pa/sec or less, more preferably ±30 Pa/sec or less, fluctuation in the outer diameter can be suppressed, and a satisfactory MCVD method can be carried out. When the rate of change in the internal pressure is limited, a rate of change of ±10 Pa/sec or more may be allowed.

### Example 5

In the silica glass pipe 3 shown in Fig. 1, a large amount of opaque soot is deposited in a downstream region of the silica glass pipe 3 and in the handling pipe 6. Such soot is removed out by a soot removing means (not shown) and collected in a soot collecting unit 31 or discharged from the exhaust portion 17. However, a large amount of soot may remain in the downstream region of the silica glass pipe 3 and the handling pipe 6 without being completely removed off. When the internal pressure of the pipe is decreased, a backflow of the soot may occur. The backflow of the soot to an effective portion results in a defect of the resultant optical fiber preform, and thus the backflow is preferably prevented. It was found that the backflow of soot easily occurs when the internal pressure of the pipe is substantially equal to the external pressure of the pipe.

Table 3 shows the results of examination of the relation between the internal pressure of the pipe, the duration time of the internal pressure, and the presence of a backflow of soot. The internal pressure of the pipe includes a deviation of about ±3 Pa relative to the target value, and the retention time includes a deviation of about ±0.2 seconds. Since the backflow of soot does not always occur, the experiment was repeated (N = 20) under the same conditions, and the frequency of occurrences of the soot backflow was examined.

**Table 3**

| Internal pressure of pipe | Duration time (sec) | Frequency of occurrence of soot backflow / Number (N) of experiments |
|---|---|---|
| -20 | 1 | 15/20 |
| 0 | 1 | 8/20 |
| +20 | 1 | 0/20 |
| +20 | 2 | 2/20 |
| +20 | 5 | 8/20 |
| +40 | 10 | 0/20 |

The results indicate that the possibility of the soot backflow increases as the internal pressure of the pipe decreases. It is also found that the possibility of the soot backflow increases as the retention time increases. Therefore, the internal pressure should preferably be more than +20 Pa, and even if the internal pressure becomes +20 Pa, the pressure of +20 Pa must not continue for 2 seconds or more.

### Industrial Applicability

A method and apparatus for producing an optical fiber preform according to the present invention are capable of producing an optical fiber preform with little fluctuation in the dimension in the longitudinal direction. The method and apparatus are particularly useful for deposition of a glass layer in a thin-walled silica glass pipe at a high deposition rate.

## Claims

1. A method of producing an optical fiber preform, comprising a deposition step of depositing a glass layer (33) in a silica glass pipe (3) by charging a gas containing at least a glass raw material into the silica glass pipe (3) from one of the ends thereof while the silica glass pipe (3) is heated from the outside by a heat source (13) relatively moving in the longitudinal direction of the silica glass pipe (3),
wherein in the deposition step, one or more exhaust portion (17) and one or more buffering gas inlet portion (21, 22) are connected to the other end of the silica glass pipe (3), and at least the amount of the exhaust gas from the exhaust portion (17) or the amount of the buffering gas introduced in the buffering gas inlet portion (21, 22) is feedback-controlled, and at least the other one of the amount of the exhaust gas from the exhaust portion (17) and the amount of the buffering gas introduced in the buffering gas inlet portion (21, 22) is pattern-controlled according to a flow rate pattern corresponding to heating positions on the silica glass pipe (3).

2. A method of producing an optical fiber preform according to claim 1,
wherein in the deposition step, the feedback-control is performed such that the internal pressure of the silica glass pipe (3) is measured and at least the amount of the exhaust gas from the exhaust portion (17) or the amount of the buffering gas introduced in the buffering gas inlet portion (21, 22) is controlled so that the measured internal pressure may coincide with a targeted value which is set for each heating position.

3. A method of producing an optical fiber preform according to claim 1,
wherein the feedback-control is performed in the deposition step such that the dimension of the silica glass pipe (3) is measured near each heating position and at least the amount of the exhaust gas from the exhaust portion (17) or the amount of the buffering gas introduced in the buffering gas inlet portion (21, 22) is controlled so that the measured dimension may become a predetermined dimension.

4. A method of producing an optical fiber preform according to claim 3,
wherein in the deposition step, a preferable value of the internal pressure of the silica glass pipe (3) necessary for conforming the measured dimension to a predetermined targeted value is calculated and the internal pressure of the silica glass pipe (3) is controlled so as to coincide with the calculated preferable value.

5. A method of producing an optical fiber preform according to claim 3 or 4,
wherein in the deposition step, the dimension of the silica glass pipe (3) is at least one of the outer diameter, the inner diameter, and the wall thickness of the silica glass pipe (3).

6. A method of producing an optical fiber preform according to any one of claims 1 to 5,
wherein in the deposition step, the deposition rate of the glass layer (33) is 0.5 g/min or more.

7. A method of producing an optical fiber preform according to any one of claims 1 to 6,
wherein in the deposition step, the ratio of the maximum to the minimum in a control range of the internal pressure of the silica glass pipe (3) is 2 times or more.

8. A method of producing an optical fiber preform according to any one of claims 1 to 7,
wherein in the deposition step, a fluctuation of the outer diameter in the longitudinal direction of the silica glass pipe (3) after deposition of the glass layer (33) is ±1 mm or less.

9. A method of producing an optical fiber preform according to any one of claims 1 to 8,
wherein in the deposition step, a rate of change in the internal pressure of the silica glass pipe (3) is -50 Pa to +50 Pa per second.

10. A method of producing an optical fiber preform according to any one of claims 1 to 8,
wherein in the deposition step, the duration time of the internal pressure of the silica glass pipe (3) at +20 Pa or less is less than 2 seconds.

11. An apparatus (1) for producing an optical fiber preform, comprising:
a gas supply system for introducing a gas containing at least a glass raw material into a silica glass pipe (3) from one of the ends thereof;
one or more exhaust portion (17) and one or more buffering gas inlet portion (21, 22), all of which can be connected to the other end of the silica glass pipe (3);
a heat source (13) which can move relatively in the longitudinal direction of the silica glass pipe (3);
a position detecting means (25) for detecting a heating position of the heat source (13) on the silica glass pipe (3);
a first control means (27a) for controlling, according to a flow rate pattern corresponding to the heating positions, at least the amount of the exhaust gas from the exhaust portion (17) or the amount of the gas introduced into the buffering gas inlet portion (21, 22); and
a second control means (27b) for feedback-controlling at least the other one of the amount of the exhaust gas from the exhaust portion (17) and the amount of the gas introduced into the buffering gas inlet portion (21, 22).

12. An apparatus (1) according to claim 11 for producing an optical fiber preform, further comprising a pressure measuring means (15) for measuring the internal pressure of the silica glass pipe (3);
wherein the second control means (27b) feedback-controls at least the amount of the exhaust gas from the exhaust portion (17) or the amount of the gas introduced into the buffering gas inlet portion (21, 22) so that the internal pressure of the silica glass pipe (3) may coincide with a targeted value set for each heating position.

13. An apparatus (1) according to claim 11 or 12 for producing an optical fiber preform, further comprising a dimension measuring means (230) for measuring the dimension of the silica glass pipe (3) near each heating position of the heat source (13);
wherein the second control means (27b) feedback-controls at least the other one of the amount of the exhaust gas from the exhaust portion (17) and the amount of the gas introduced into the buffering gas inlet portion (21, 22) so that the dimension of the silica glass pipe (3) measured by the dimension measuring means (230) may coincide with a predetermined targeted dimension of the pipe (3).

## Patentansprüche

1. Verfahren zur Herstellung einer Vorform für eine optische Faser mit einem Abscheidungsschritt des Abscheiden einer Glasschicht (33) in einem Silikatglasrohr (3) durch Einfüllen eines Gases, das zumindest ein Glasrohmaterial enthält, in das Silikatglasrohr (3) von einem der Enden desselben, während das Silikatglasrohr (3) von außen durch eine Wärmequelle (13) erwärmt wird, die sich relativ in der Längsrichtung des Silikatglasrohrs (3) bewegt,
wobei in dem Abscheidungsschritt, einer oder mehrere Abgasabschnitte (17) und einer oder mehrere Puffergaseinlassabschnitte (21, 22) mit dem anderen Ende des Silikatglasrohrs (3) verbunden sind, und zumindest die Menge des Abgases von dem Abgasabschnitt (17) oder die Menge des Puffergases, die in den Puffergaseinlassabschnitt (21, 22) eingebracht ist, feedbackgesteuert wird, und zumindest das Andere aus der Menge von Abgas aus dem Abgasabschnitt (17) und der Menge des Puffergases, die in den Puffergaseinlassabschnitt (21, 22) eingebracht ist, gemäß einem Flussratemuster, das Erwärmungspositionen auf dem Silikatglasrohrs (3) entspricht, mustergesteuert ist.

2. Verfahren zur Herstellung einer Vorform für eine optische Faser gemäß Anspruch 1, bei dem in dem Abscheidungsschritt, die Feedbacksteuerung so durchgeführt wird, dass der Innendruck des Silikatglasrohrs (3) gemessen wird, und zumindest die Menge von Abgas aus dem Abgasabschnitt (17) oder die Menge von Puffergas, die in den Puffergaseinlassabschnitt (21, 22) eingebracht ist, so gesteuert wird, dass der gemessene Innendruck mit einem Zielwert, der für jede Erwärmungsposition eingestellt ist, zusammenfallen kann.

3. Verfahren zur Herstellung einer Vorform für eine optische Faser gemäß Anspruch 1, bei der die Feedbacksteuerung in dem Abscheidungsschritt so durchgeführt wird, dass die Dimension des Silikatglasrohrs (3) nahe jeder Erwärmungsposition gemessen wird, und zumindest die Menge des Abgases aus dem Abgasabschnitt (17) oder die Menge des Puffergases, die in den Puffergaseinlassabschnitt (21, 22) eingebracht ist, so gesteuert wird, dass die gemessene Dimension zu einer vorbestimmten Dimension werden kann.

4. Verfahren zur Herstellung einer Vorform für eine optische Faser gemäß Anspruch 3, bei dem in dem Abscheidungsschritt ein bevorzugter Wert für den Innendruck des Silikatglasrohrs (3), der notwendig ist, um die gemessene Dimension auf einen vorbestimmten Zielwert zu normieren, berechnet wird und der Innendruck des Silikatglasrohrs (3) so gesteuert wird, dass er mit dem berechneten bevorzugten Wert zusammenfällt.

5. Verfahren zur Herstellung einer Vorform für eine optische Faser gemäß Anspruch 3 oder 4, bei dem in dem Abscheidungsschritt die Dimension des Silikatglasrohrs (3) zumindest eines aus dem äußeren Durchmesser, dem inneren Durchmesser und der Wanddicke des Silikatglasrohrs (3) ist.

6. Verfahren zur Herstellung einer Vorform für eine optische Faser gemäß einem der Ansprüche 1 bis 5, bei dem in dem Abscheidungsschritt die Abscheidungsrate der Glasschicht (33) 0,5 g/min oder mehr beträgt.

7. Verfahren zur Herstellung einer Vorform für eine optische Faser gemäß einem der Ansprüche 1 bis 6,
bei dem in dem Abscheidungsschritt, das Verhältnis des Maximums zu dem Minimum in dem Steuerbereich des Innendruckes des Silikatglasrohrs (3) 2-fach oder mehr beträgt.

8. Verfahren zur Herstellung einer Vorform für eine optische Faser gemäß einem der Ansprüche 1 bis 7, bei dem in dem Abscheidungsschritt eine Schwankung des äußeren Durchmessers in der Längsrichtung des Silikatglasrohrs (3) nach Abscheidung der Glasschicht (33) ± 1 mm oder weniger beträgt.

9. Verfahren zur Herstellung einer Vorform für eine optische Faser gemäß einem der Ansprüche 1 bis 8, bei dem in dem Abscheidungsschritt eine Änderungsrate des Innendrucks des Silikatglasrohrs (3) -50 Pa bis +50 Pa pro Sekunde beträgt.

10. Verfahren zur Herstellung einer Vorform für eine optische Faser gemäß einem der Ansprüche 1 bis 8,
bei dem in dem Abscheidungsschritt die Haltedauer des Innendrucks des Silikatglasrohrs (3) bei +20 Pa oder weniger, weniger als 2 Sekunden beträgt.

11. Vorrichtung (1) zur Herstellung einer Vorform für eine optische Faser, mit:
einem Gaszuführungssystem zum Einbringen eines Gases, das zumindest ein Glasrohmaterial aufweist, in ein Silikatglasrohr (3) von einem der Enden desselben;
einem oder mehreren Abgasabschnitten (17) und einem oder mehreren Puffergaseinlassabschnitten (21, 22) von denen alle mit dem anderen Ende des Silikatglasrohrs (3) verbunden sein können;
einer Wärmequelle (13), die sich relativ in der Längsrichtung des Silikatglasrohrs (3) bewegen kann;
einer Positionsbestimmungseinrichtung (25) zum Bestimmen einer Erwärmungsposition der Wärmequelle (13) auf dem Silikatglasrohr (3);
einer ersten Steuerungseinrichtung (27a) zum Steuern zumindest der Menge von Abgas aus dem Abgasabschnitt (17) oder der Menge des Gases, die in den Puffergaseinlassabschnitt (21, 22) eingebracht ist, gemäß eines Flussratemusters, das den Erwärmungspositionen entspricht; und
einer zweiten Steuerungseinrichtung (27b) zum Feedbacksteuern zumindest des Anderen aus der Menge des Abgases aus dem Abgasabschnitt (17) und der Menge des Gases, die in den Puffergaseinlassabschnitt (21, 22) eingebracht ist.

12. Vorrichtung (1) gemäß Anspruch 11 zur Herstellung einer Vorform für eine optische Faser, ferner mit einer Druckmesseinrichtung (15) zum Messen des Innendrucks des Silikatglasrohrs (3);
wobei die zweite Steuerungseinrichtung (27b) zumindest die Menge des Abgases aus dem Abgasabschnitt (17) oder die Menge des Gases, die in den Puffergaseinlassabschnitt (21, 22) eingebracht ist, so feedback-steuert, dass der Innendruck des Silikatglasrohrs (3) mit einem Zielwert, der für jede Erwärmungsposition eingestellt ist, zusammenfallen kann.

13. Vorrichtung (1) gemäß Anspruch 11 oder 12 zur Herstellung einer Vorform für eine optische Faser ferner mit einer Dimensionsmesseinrichtung (230) zum Messen der Dimension des Silikatglasrohrs (3) nahe jeder Erwärmungsposition der Wärmequelle (13);
wobei die zweite Steuerungseinrichtung (27b) zumindest das Andere aus der Menge des Abgases aus dem Abgasabschnitt (17) und der Menge des Gases, die in den Puffergaseinlassabschnitt (21, 22) eingebracht ist, so feedback-steuert, dass die Dimension des Silikatglasrohrs (3), die durch die Dimensionsmesseinrichtung (230) gemessen wurde, mit einer vorbestimmten Zieldimension des Rohrs (3) zusammenfallen kann.

## Revendications

1. Procédé de production d'une préforme de fibre optique, comprenant une étape de dépôt de dépôt d'une couche de verre (33) dans un tube en verre de silice (3) par introduction d'un gaz contenant au moins une matière première du verre dans le tube en verre de silice (3) depuis une extrémité ou les extrémités de celui-ci tandis que le tube en verre de silice (3) est chauffé de l'extérieur par une source de chaleur (13) se déplaçant relativement dans la direction longitudinale du tube en verre de silice (3),
où, dans l'étape de dépôt, une ou plusieurs parties d'évacuation (17) et une ou plusieurs parties d'entrée de gaz d'amortissement (21, 22) sont reliées à l'autre extrémité du tube en verre de silice (3), et au moins la quantité du gaz d'évacuation provenant de la partie d'évacuation (17) ou la quantité du gaz d'amortissement introduit dans la partie d'entrée de gaz d'amortissement (21, 22) est régulée par contre-réaction, et au moins l'autre de la quantité du gaz d'évacuation provenant de la partie d'évacuation (17) et de la quantité du gaz d'amortissement introduit dans la partie d'entrée de gaz d'amortissement (21, 22) est régulée par configuration selon une configuration de débit correspondant à des positions de chauffage sur le tube en verre de silice (3).

2. Procédé de production d'une préforme de fibre optique selon la revendication 1,
où, dans l'étape de dépôt, la régulation par contre-réaction est accomplie de telle sorte que la pression interne du tube en verre de silice (3) est mesurée et au moins la quantité du gaz d'évacuation provenant de la partie d'évacuation (17) ou la quantité du gaz d'amortissement introduit dans la partie d'entrée de gaz d'amortissement (21, 22) est régulée de sorte que la pression interne mesurée peut coïncider avec une valeur cible qui est fixée pour chaque position de chauffage.

3. Procédé de production d'une préforme de fibre optique selon la revendication 1,
où la régulation par contre-réaction est accomplie dans l'étape de dépôt de telle sorte que la dimension du tube en verre de silice (3) est mesurée à proximité de chaque position de chauffage et au moins la quantité du gaz d'évacuation provenant de la partie d'évacuation (17) ou la quantité du gaz d'amortissement introduit dans la partie d'entrée de gaz d'amortissement (21, 22) est régulée de sorte que la dimension mesurée peut devenir une dimension prédéterminée.

4. Procédé de production d'une préforme de fibre optique selon la revendication 3,
où, dans l'étape de dépôt, une valeur préférable de la pression interne du tube en verre de silice (3) nécessaire pour conformer la dimension mesurée à une valeur cible prédéterminée est calculée et la pression interne du tube en verre de silice (3) est régulée de manière à coïncider avec la valeur préférable calculée.

5. Procédé de production d'une préforme de fibre optique selon la revendication 3 ou 4,
où, dans l'étape de dépôt, la dimension du tube en verre de silice (3) est au moins l'un du diamètre externe du diamètre interne et de l'épaisseur de paroi du tube en verre de silice (3).

6. Procédé de production d'une préforme de fibre optique selon l'une quelconque des revendications 1 à 5,
où, dans l'étape de dépôt, la vitesse de dépôt de la couche de verre (33) est 0,5 g/min ou plus.

7. Procédé de production d'une préforme de fibre optique selon l'une quelconque des revendications 1 à 6,
où, dans l'étape de dépôt, le rapport du maximum au minimum dans une plage de régulation de la pression interne du tube en verre de silice (3) est 2 fois ou plus.

8. Procédé de production d'une préforme de fibre optique selon l'une quelconque des revendications 1 à 7,
où, dans l'étape de dépôt, une fluctuation du diamètre externe dans la direction longitudinale du tube en verre de silice (3) après dépôt de la couche de verre (33) est ± 1 mm ou moins.

9. Procédé de production d'une préforme de fibre optique selon l'une quelconque des revendications 1 à 8,
où, dans l'étape de dépôt, une vitesse de changement dans la pression interne du tube en verre de silice (3) est -50 Pa à + 50 Pa par seconde.

10. Procédé de production d'une préforme de fibre optique selon l'une quelconque des revendications 1 à 8,
où, dans l'étape de dépôt, la durée de la pression interne du tube en verre de silice (3) à +20 Pa ou moins est inférieure à 2 secondes.

11. Appareil (1) pour produire une préforme de fibre optique comprenant :
un système d'apport de gaz pour introduire un gaz contenant au moins une matière première du verre dans un tube en verre de silice (3) depuis l'une de ses extrémités ;
une ou plusieurs parties d'évacuation (17) et une ou plusieurs parties d'entrée de gaz d'amortissement (21, 22), qui toutes peuvent être reliées à l'autre extrémité du tube en verre de silice (3) ;
une source de chaleur (13) qui peut se déplacer relativement dans la direction longitudinale du tube en verre de silice (3) ;
un moyen de détection de position (25) pour détecter une position de chauffage de la source de chaleur (13) sur le tube en verre de silice (3) ;
un premier moyen de régulation (27a) pour réguler, selon une configuration de débit correspondant aux positions de chauffage, au moins la quantité du gaz d'évacuation provenant de la partie d'évacuation (17) ou la quantité du gaz introduit dans la partie d'entrée de gaz d'amortissement (21, 22) ; et
un second moyen de régulation (27b) pour réguler par contre-réaction au moins l'autre de la quantité du gaz d'évacuation provenant de la partie d'évacuation (17) et de la quantité du gaz introduit dans la partie d'entrée de gaz d'amortissement (21, 22).

12. Appareil (1) selon la revendication 11 pour produire une préforme de fibre optique comprenant en outre un moyen de mesure de la pression (15) pour mesurer la pression interne du tube en verre de silice (3) ;
où le second moyen de régulation (27b) régule par contre-réaction au moins la quantité du gaz d'évacuation provenant de la partie d'évacuation (17) ou la quantité du gaz introduit dans la partie d'entrée de gaz d'amortissement (21, 22) de sorte que la pression interne du tube en verre de silice (3) peut coïncider avec une valeur cible fixée pour chaque position de chauffage.

13. Appareil (1) selon la revendication 11 ou 12 pour produire une préforme de fibre optique comprenant en outre un moyen de mesure de dimension (230) pour mesurer la dimension du tube en verre de silice (3) à proximité de chaque position de chauffage de la source de chaleur (13) ;
où le second moyen de régulation (27b) régule par contre-réaction au moins l'autre de la quantité du gaz d'évacuation provenant de la partie d'évacuation (17) et de la quantité du gaz introduit dans la partie d'entrée de gaz d'amortissement (21, 22) de sorte que la dimension du tube en verre de silice (3) mesurée par le moyen de mesure de dimension (230) peut coïncider avec une dimension cible prédéterminée du tube (3).
